# EUROPEAN PATENT APPLICATION

(11) **EP 4 810 332 A1**
(43) Date of publication of application: **23.09.2026**
(21) Application number: 24891796.5
(22) Date of filing: 15.11.2024
(51) Int. Cl.: B60T 8/24, B60T 8/32, B60T 8/171, B60T 8/172

(54) **SYSTEM AND METHOD FOR CONTROLLING AGRICULTURAL TRACTOR**

(30) Priority: 16.11.2023 KR 20230159055; 14.11.2024 KR 20240162132
(71) Applicant: LS Mtron Ltd., Anyang-si, Gyeonggi-do 14119 (KR)
(72) Inventor: BONG, Jong Oh, Anyang-si Gyeonggi-do 14119 (KR); CHOI, Jong Min, Anyang-si Gyeonggi-do 14119 (KR)
(74) Representative: K&L Gates LLP
(86) International application number: PCT/KR2024/018035
(87) International publication number: WO 2025/105850

(57) **Abstract**

The present invention is directed to technology for controlling the driving of an agricultural tractor. The present invention provides a system for controlling an agricultural tractor, wherein a brake device according to the present invention is controlled to operate in either a first or second mode, the brake device operates in the first mode such that at least any one of first and second brakes operates according to the operation information input by the operation of a user, and the brake device operates in the second mode such that at least any one of the first and second brakes operates based on a predefined control algorithm. The present invention has the effects of ensuring that control is appropriately performed according to the work environment and guaranteeing high-precision control.

## Description

### Technical Field

The present invention relates to an agricultural tractor, and more particularly to technology for controlling an agricultural tractor.

### Background Art

Agricultural tractors can perform various types of agricultural work, such as cultivation, the spraying of fertilizers and pesticides, harvesting, and transportation.

Agricultural tractors perform agricultural work while driving across work target areas.

During the performance of agricultural work, agricultural tractors perform frequent turning as well as straight driving depending on the work environment (e.g., the dimensions, terrain, road surface conditions of the target work area, and/or the like).

In the process in which an agricultural tractor performs agricultural work, when a planned work area is immediately next to the area where previous work was completed, 180-degree turning is required. When the dimensions of the work target area are small or the width of the farm road is narrow, a change of direction requiring a large turning angle may be necessary.

The turning radius of an agricultural tractor is one of the factors that govern work efficiency.

Agricultural work using agricultural tractors is mostly carried out in small work target areas due to the work conditions in Korea, where high-density agriculture predominates, unlike in the United States, where large-scale agriculture is dominant.

When work efficiency in Korea is taken into consideration, agricultural tractors need to be driven to minimize the turning radius.

Most agricultural tractors are equipped with a split brake function designed to control brakes on left and right rear wheels to operate independently in order to minimize the turning radius.

When the split brake function is performed, the agricultural tractors turn using a braked wheel as the approximate center of rotation.

A conventional split brake function is operated in such a manner that a user selectively operates two brake actuation means for braking different wheels.

In order to appropriately use this manually-operated split brake function, a user had to perform the operation of selectively pressing the pedals included in the two brake actuation means while performing steering, which required the user's attention every time.

In particular, in order to allow an agricultural tractor to make a turn with the turning radius intended by a user in a narrow work target area, the user had no choice but to repeatedly perform steering and pedaling operations, resulting in the significant fatigue of the user.

The manually-operated split brake function is limited to operation based on the user's intuition, so that not only is work efficiency dependent on the user's proficiency, but the risk of safety-related accidents cannot be ruled out.

As part of technology for resolving the problems associated with operating the split brake function manually, a technology for automating a split brake function has been proposed.

A reference will be made to Korean Patent Application Publication No. 10-2011-0108828 (filed on March 30, 2010, published on October 6, 2011 and entitled Automatic Split Brake Device for Tractor; hereinafter referred to as the 'conventional art').

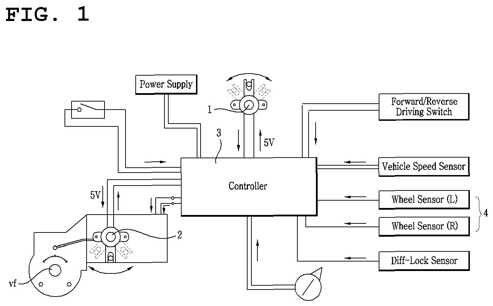

FIG. 1 is a conceptual diagram illustrating the operation of the conventional art.

Referring to FIG. 1, the conventional art includes a steering sensing unit 1, a position sensing unit 2, and a controller 3.

The steering sensing unit 1 is installed on the steering wheel of the tractor, and detects the steering direction of the steering wheel.

The position sensing unit 2 detects the rotation angle of a final reduction gear connected between the motor shaft of a drive motor M, installed in a transmission, and a reducer (not shown).

The controller 3 controls the overall operation of the split brake while appropriately driving the drive motor M installed in the transmission of the tractor via electrical signals (voltage changes) based on the detection of the individual sensing units 1 and 2.

The conventional art was proposed such that the split brake function was automatically operated according to the steering direction of the agricultural tractor.

The conventional art merely operates the split brake function automatically, so that it may be difficult to respond flexibly when an unpredictable situation occurs.

Agricultural tractors may face unexpected situations due to road conditions during agricultural work.

The automatic split brake function proposed by the conventional art measures the rotational speed of a wheel via a wheel sensor 4 for measuring the number of rotations of the wheel, and uses this as an input variable when controlling split brakes.

When faced with an unexpected situation, the split brake function is automatically performed based on the measurements taken by the individual sensing units. However, the predicted driving situation of the agricultural tractor controlled based on the measurements and the actual driving situation of the agricultural tractor may differ from each other.

When slip has occurred, there is the little positional movement of the agricultural tractor and wheels only spin freely, making it difficult to predict the actual driving speed of the agricultural tractor using the rotational speed of the wheel.

The agricultural tractor might be driven contrary to the user's intention due to the split brake function that was automatically performed based only on the measurements taken by the individual sensing units.

The automatic split brake function according to the conventional art has limitations in being universally applied to different work environments.

### [Conventional Art Literature]

### [Patent Literature]

(Patent Document 1) Korean Patent Application Publication No. 10-2011-0108828
(Patent Document 2) Korean Patent Application Publication No. 10-2002-0066146

### Disclosure

### Technical Problem

The present invention has been conceived from the quest for technology for controlling an agricultural tractor that can be flexibly applied according to the work environment.

### Technical Solution

In order to accomplish the above object, a system for controlling an agricultural tractor according to one embodiment of the present invention includes: a brake device (150) configured to apply stopping force to at least any one of first and second drive wheels (121c and 121d) that the agricultural tractor has; a detection unit (200) configured to detect a driving state of the agricultural tractor; and an integrated control unit (500) configured to control the operation of the brake device according to the driving state of the agricultural tractor detected by the detection unit (200); wherein the brake device (150) includes: a first brake operation means (151) configured to operate a first brake (151b) connected to the first drive wheel (121c); and a second brake operation means (152) configured to operate a second brake (152b) connected to the second drive wheel (121d); wherein the integrated control unit (500) controls the brake device (150) to operate in either a first or second mode; wherein the brake device (150) operates in the first mode such that at least any one of the first and second brakes (151b and 152b) is operated according to the operation information input by the operation of a user; and wherein the brake device (150) operates in the second mode such that at least any one of the first and second brakes (151b and 152b) is operated based on a predefined control algorithm.

The brake device (150) may further include a differential locking means (153) configured to regulate the first and second brake operation means (151 and 152) to operate in conjunction with each other, and the integrated control unit (500) may activate a split brake function designed to selectively operate the first and second brakes (151b and 152b) when the regulation of the differential locking means (153) is released.

The detection unit (200) may generate detection information in which the driving state of the agricultural tractor is detected, and the detection information may include at least any one of the position information, steering information, speed information, driving direction information, turning radius information, and brake pressure information of the agricultural tractor.

The driving direction information may include the driving state of the agricultural tractor for forward driving or reverse driving thereof, and the integrated control unit (500) may activate a split brake function designed to selectively operate the first and second brakes (151b and 152b) when the agricultural tractor is driving forward.

The integrated control unit (500) may include: a collection part (510) configured to collect the operation information and the detection information as training data in the first mode; a learning part (520) configured to learn the training data and update the predefined control algorithm to an optimized form; and a storage part (530) configured to store the control algorithm updated through the learning in the learning part (520); the learning part (520) optimizes and updates the control algorithm, stored in the storage part (530) at an immediately previous time through learning, at every time the training data is collected by the collection part (510); and the control algorithm derives a control command to control the operation of the brake device (150) according to a driving condition of the agricultural tractor.

The system (10) may further include a setting unit (300) configured to set the driving condition.

The driving condition may include the turning radius of the agricultural tractor.

The integrated control unit (500) may further include: a slip determination part (540) configured to determine slip based on the detection information; and a compensation control part (550) configured to control the operation of the agricultural tractor to compensate for a slip error determined by the slip determination unit (540).

The system (10) may further include a selection unit (400) configured to select the operation mode of the brake device (150), and the integrated control unit (500) may control the brake device (150) to operate in either a first or second mode according to the operation mode of the brake device (150) selected by the selection unit (400).

Meanwhile, in order to accomplish the above object, a method of controlling an agricultural tractor according to one embodiment of the present invention includes: a monitoring step (S100) of monitoring detection information in which the driving state of the agricultural tractor is detected; an activation determination step (S200) of determining whether to activate a split brake function designed to selectively operate first and second brakes (151b and 152b) provided in a brake device (150); and a brake control step (S300) of, when the split brake function is activated in the activation determination step (S200), controlling the brake device (150) to operate in either a first or second mode; when the brake device (150) operates in the first mode in the brake control step (S300), the operation of the brake device (150) is controlled to perform the split brake function according to the operation information input by the operation of a user; when the brake device (150) operates in the second mode in the brake control step (S300), the operation of the brake device (150) is controlled to perform the split brake function based on a predefined control algorithm; and the control algorithm is updated to an optimized form while learning the detection information and the operation information collected at a time when the brake device (150) operates in the first mode.

### Advantageous Effects

According to the present invention described above, the following effects are achieved:

First, as the split brake function is automatically controlled based on the control algorithm that has learned the operation information of a user, a predetermined or higher level of work efficiency may be guaranteed.

Second, timely control may be performed depending on the work environment.

Third, as the error between target and actual driving paths is automatically corrected, high control precision may be guaranteed.

### Description of Drawings

FIG. 1 is a reference view illustrating a conventional art;
FIG. 2 is a block diagram illustrating a system for controlling an agricultural tractor according to one embodiment of the present invention;
FIG. 3 is a reference view illustrating a system for controlling an agricultural tractor according to one embodiment of the present invention;
FIG. 4 is a flowchart showing a method of controlling an agricultural tractor using the control system of the agricultural tractor according to one embodiment of the present invention; and
FIGS. 5 to 7 are conceptual diagrams illustrating a method of controlling an agricultural tractor using the control system of the agricultural tractor according to one embodiment of the present invention.

### Mode for Invention

Preferred embodiments according to the present invention will be described with reference to the accompanying drawings. For the sake of brevity, descriptions of well-known components are omitted or abridged as much as possible.

### <Description of System for Controlling Agricultural Tractor>

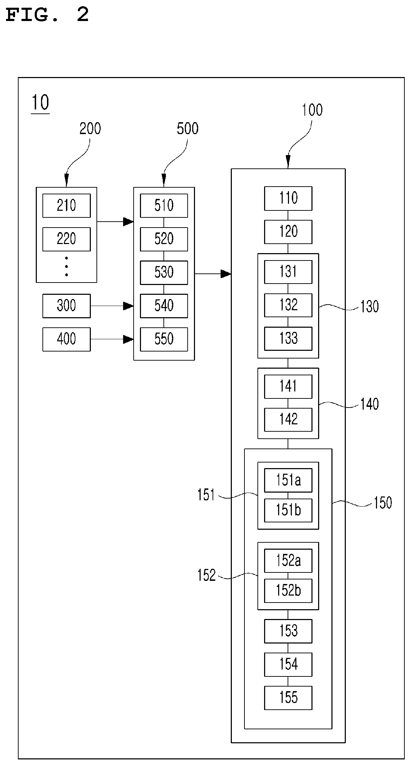

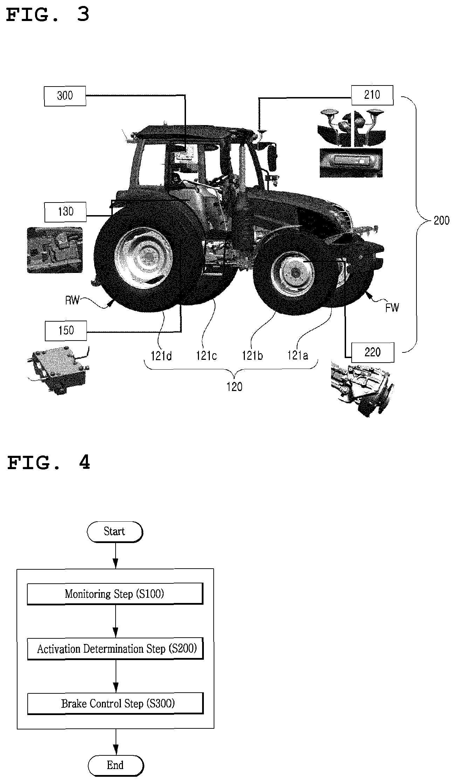

FIG. 2 is a block diagram illustrating a system for controlling an agricultural tractor according to one embodiment of the present invention, and FIG. 3 is a reference view illustrating a system for controlling an agricultural tractor according to one embodiment of the present invention.

Referring to FIGS. 2 and 3, a system 10 for controlling an agricultural tractor according to one embodiment of the present invention includes a drive unit 100, a detection unit 200, a setting unit 300, a selection unit 400, and an integrated control unit 500.

The drive unit 100 is a component for driving the agricultural tractor.

The drive unit 100 is equipped with components related to the driving of the agricultural tractor.

The drive unit 100 includes a drive source 110, a drive mechanism 120, a steering mechanism 130, a transmission 140, and a brake device 150.

The drive source 110 generates driving force.

The driving force generated by the drive source 110 may be used as driving power for the drive mechanism 120 or utilized as working power for an implement.

At least any one of an engine and a drive motor operated by a battery may be applied as the drive source 110.

The drive mechanism 120 is provided for the driving of the agricultural tractor.

The drive mechanism 120 is driven by the driving force of the drive source 110.

The drive mechanism 120 has a plurality of drive wheels 121a, 121b, 121c, and 121d.

The plurality of drive wheels 121a, 121b, 121c, and 121d are components configured to drive across a work target area, and may be divided into front wheels FW and rear wheels RW.

The drive wheels 121a and 121b positioned on the front wheels FW function as steering target wheels for changing a driving direction. The remaining drive wheels 121c and 121d are positioned on the rear wheels RW.

The steering mechanism 130 is a component for changing the steering direction of the drive mechanism 120.

The steering mechanism 130 includes a steering wheel 131, a steering valve 132, and a steering control part 133.

The steering wheel 131 is provided in the form of a wheel for steering.

The steering wheel 131 may be operated by a user.

The steering valve 132 adjusts the steering angle of the front wheels FW.

A proportional control valve that can be electronically controlled may be applied as the steering valve 132.

The steering control part 133 is a component for controlling the steering valve 132.

The steering control part 133 communicates with at least any one of the detection unit 200 and the setting unit 300, and may control the steering valve 132.

The steering control part 133 communicates with the detection unit 200, and may be provided with detection information including steering information.

The steering information may be obtained from a steering sensor (not shown) for detecting the amount of rotation of the steering wheel 131.

The steering control part 133 controls the operation of the steering valve 132 by referring to the detection information provided by the detection unit 200. The steering valve 132 steers the front wheels FW by an amount corresponding to the amount of rotation of the steering wheel 131.

The steering control part 133 communicates with the setting unit 300, and may control the operation of the steering valve 132 by referring to preset driving conditions.

The turning radius of the agricultural tractor may be included as a driving condition for controlling the operation of the steering valve 132.

The steering control part 133 communicates with the integrated control unit 500, and may be provided with detection information or driving conditions by the integrated control unit 500.

As the steering valve 132 is appropriately controlled by the steering control part 133, the steering angle of the front wheels FW may be adjusted according to the intention of the user.

The transmission 140 transmits the driving force of the drive source 110 to the drive mechanism 120.

The transmission 140 may perform the gear shifting of the drive mechanism 120 in the process of transmitting the driving force to the drive mechanism 120.

The transmission 140 may be electronically controlled.

The transmission 140 may include an operation part 141 and a shifting performance part 142.

The operation part 141 is a component for commanding gear shifting through the operation of the user.

The operation part 141 may include a forward/reverse operation means 141a and a shifting operation means 142b.

A user command for the forward or reverse driving of the agricultural tractor may be input by the operation of the forward/reverse operation means (not shown).

A user command to change the driving speed of the drive mechanism 120 may be input by the operation of the shifting operation means (not shown).

The forward/reverse operation means and the shifting operation means may be provided as a gear shift lever (not shown) and a gear shift pedal (not shown), respectively.

Both the forward/reverse operation means and the shifting operation means may be provided as gear shift pedals (not shown). In this case, the operation part 141 may be provided as a plurality of gear shift pedals for commanding forward shifting and reverse shifting, respectively.

The shifting performance part 142 is a component for performing gear shifting according to a user command received through the operation part 141.

When a user command for the forward or reverse driving of the agricultural tractor is input via the operation part 141, the shifting performance part 142 transmits the driving force of the drive source 110 to the drive mechanism 120 so that the rotation direction of the drive wheels 121a, 121b, 121c and 121d is switched to forward rotation (forward driving) or reverse rotation (reverse driving).

When a user command for the driving speed of the agricultural tractor is input via the operation part 141, the shifting performance part 142 transmits the driving force of the drive source 110 corresponding to the driving speed to the drive mechanism 120.

Since the driving speed is proportional to the pedal travel of the gear shift pedal, the shifting performance part 142 performs gear shifting corresponding to the pedal travel of the gear shift pedal.

The shifting performance part 142 may be controlled by the integrated control unit 500.

The integrated control unit 500 communicates with at least any one of the detection unit 200 and the setting unit 300, and may control the shifting performance part 142.

The integrated control unit 500 communicates with the detection unit 200, and may be provided with detection information including driving direction information and gear shifting information.

The driving direction information includes a driving state for the forward or reverse driving of the agricultural tractor.

The driving direction information may be obtained from a detection sensor (not shown) for detecting the operation of the forward/reverse operation means.

The gear shift information may be obtained from a pedal sensor (not shown) for detecting the pedal travel of the gear shift pedal.

The integrated control unit 500 controls the operation of the shifting performance part 142 by referring to the detection information provided by the detection unit 200.

The integrated control unit 500 communicates with the setting unit 300, and may control the operation of the shifting performance part 142 by referring to the preset driving conditions.

The driving conditions for the control of the operation of the shifting performance part 142 may include the driving direction and speed of the agricultural tractor.

As the drive mechanism 120 is appropriately shifted by the shifting performance part 142, at least any one of the driving direction and speed of the agricultural tractor may be adjusted according to the intention of the user.

The braking device 150 is a component for braking the vehicle 120.

The braking device 150 includes a first brake operation means 151, a second brake operation means 152, a differential locking means 153, and a brake valve 154.

The first brake operation means 151 is a component for applying stopping force to any one (hereinafter referred to as the 'first drive wheel 121c') of the plurality of drive wheels 121a, 121b, 121c, and 121d.

The first brake operation means 151 includes a first brake pedal 151a and a first brake 151b.

The first brake pedal 151a is a component for commanding braking through the operation of the user.

The first brake 151b is a component for performing the braking of the first drive wheel 121c in accordance with a user command coming through the first brake pedal 151a.

When the user steps on the first brake pedal 151a, the first brake 151b is actuated by the components operating in conjunction with the first brake pedal 151a, and the rotation of the first drive wheel 121c positioned on the rear wheel RW of the agricultural tractor may be stopped.

The second brake operation means 152 is a component for applying stopping force to any one (hereinafter referred to as the 'second drive wheel 121d') of the plurality of drive wheels 121a, 121b, 121c, and 121d.

The second brake operation means 152 includes a second brake pedal 152a and a second brake 152b.

The second brake pedal 152a is a component for commanding braking through the operation of the user.

The second brake 152b is a component for performing the braking of the second drive wheel 121d in accordance with a user command coming through the second brake pedal 152a.

When the user steps on the second brake pedal 152a, the second brake 152b is actuated by the components operating in conjunction with the second brake pedal 152a, and the rotation of the second drive wheel 121d positioned on the rear wheel RW of the agricultural tractor may be stopped.

The differential locking means 153 is a component for regulating the operation of the first brake operation means 151 and the second brake operation means 152 so that they operate in conjunction with each other.

When the operation of the first brake operation means 151 and the second brake operation means 152 is regulated by the differential locking means 153, the first brake operation means 151 and the second brake operation means 152 operate together.

When the regulation of the first brake operation means 151 and the second brake operation means 152 is released by the differential locking means 153, the first brake operation means 151 or second brake operation means 152 of the brake device 150 may operate independently.

In this case, the brake device 150 functions as split brakes that selectively apply stopping force to either the first drive wheel 121c or the second drive wheel 121d.

When the brake device 150 functions as split brakes, the agricultural tractor is rotated using the drive wheel, to which the stopping force is applied, as the approximate center of rotation.

The brake valve 154 controls the stopping force provided to at least any one of the first and second drive wheels 121c and 121d.

An electro-hydraulic brake valve that can be electronically controlled may be applied as the brake valve 154.

The brake valve 154 may be controlled by the integrated control unit 500.

The integrated control unit 500 communicates with at least any one of the detection unit 200 and the setting unit 300, and may control the operation of the brake valve 154.

The integrated control unit 500 communicates with the detection unit 200, and may be provided with detection information including braking information and brake pressure information.

The braking information may be obtained from pedal sensors (not shown) for detecting the pedal travel of the first brake pedal 151a and the pedal travel of the second brake pedal 152a, respectively.

The brake pressure information may be obtained from sensing sensors (not shown) for detecting pieces of brake pressure information applied to the respective drive wheels 121c and 121d positioned on the rear wheels RW.

The integrated control unit 500 controls the operation of the brake valve 154 by referring to the detection information provided by the detection unit 200.

The brake valve 154 applies stopping force to the first brake 151b or the second brake 152b in an amount corresponding to the pedal travel of the first brake pedal 151a or the second brake pedal 152a.

The integrated control unit 500 communicates with the setting unit 300, and may control the operation of the brake valve 154 by referring to the preset operation conditions.

The driving direction, speed, and turning radius of the agricultural tractor may be referenced as the driving conditions for the control of the operation of the brake valve 154.

As the brake valve 154 is appropriately controlled by the integrated control unit 500, the agricultural tractor makes a turn with the turning radius intended by the user or a minimum turning radius.

The brake device 150 may be operated in a first mode or a second mode by the control of the integrated control unit 500.

In the first mode, at least any one of the first and second brakes 151b and 152b of the brake device 150 may be operated according to the operation information input by the operation of the user.

The first mode means that the brake device 150 is manually operated by the user to perform the turning driving of the agricultural tractor according to the intention of the user.

In the second mode, at least any one of the first and second brakes 151b and 152b of the brake device 150 may be operated based on a predefined control algorithm.

The second mode means that the brake device 150 is automatically operated by the control of the integrated control unit 500 without the intervention of the user who operates the brake device 150.

In the second mode, the integrated control unit 500 supports the agricultural tractor so that it makes a turn with the turning radius intended by the user or a minimum turning radius.

In addition, it is obvious that the drive unit 100 may include components related to work, such as a connection device (not shown) for performing mechanical connection with an implement, and a work operator (not shown) for operating the work operation of the implement.

The detection unit 200 generates detection information in which the driving state of the agricultural tractor is detected.

The detection information includes at least any one of the following: the position information, steering information, speed information, driving direction information, turning radius information, braking information, brake pressure information, tilt information, brake regulation information, and gear shifting information of the agricultural tractor.

The detection unit 200 may generate the above-described detection information based on the detection values detected from a plurality of detection means (not shown) installed on the agricultural tractor.

Examples of the plurality of detection means may include a position information acquisition part 210, and a steering information acquisition part 220.

A dual antenna and a receiver may be applied to the location information acquisition part 210 as a detection means for acquiring location information.

The location information acquisition part 210 may acquire the real-time location information of the agricultural tractor including latitude and longitude by transmitting signals associated with a global satellite navigation system (GNSS), such as GPS, GLONASS, or BEIDOU, and RTK correction signals.

It is obvious that not only position information but also speed information and driving direction information may be obtained through the detection values detected via the position information acquisition part 210.

The position information acquisition part 210 may have a position accuracy of ±3 cm and a heading accuracy of within 0.08° through real-time position correction based on GNSS signals and RTK correction signals.

In the steering information acquisition part 220, a position sensor may be additionally applied in addition to the above-mentioned steering sensor as a detection means for acquiring steering information.

In the case of a potential sensor, the steering angle of the front wheels FW may be measured, and steering information may be acquired from a measured value.

In addition, as examples of the plurality of detection means, a gyroscope sensor and inertial measurement unit (IMU) sensor capable of acquiring attitude information such as the tilt information and direction information of the agricultural tractor may be included.

The setting unit 300 is a component for setting the driving conditions of the agricultural tractor.

The setting unit 300 is provided in the form of an operation panel that allows the user to monitor driving and work status as well as the overall status of the agricultural tractor and input driving conditions for controlling the driving and work of the agricultural tractor via a screen.

The setting unit 300 may be provided as a human-machine interface (HMI) device.

As an example, the driving condition input to the setting unit 300 by the user may be the turning radius of the agricultural tractor.

When the turning radius for a point on the work path of a work target area is input as a driving condition via the setting unit 300, the integrated control unit 500 controls the driving of the drive unit 100 so that the agricultural tractor can make a turn with the turning radius intended by the user.

The integrated control unit 500 controls detailed requirements, such as the driving speed, brake pressure, and steering angle of the agricultural tractor, to appropriate levels according to the driving conditions.

The driving conditions input by the user to the setting unit 300 are not limited to the turning radius, but may include setting information for detailed requirements for controlling the driving and work of the agricultural tractor, such as the setting of a work path, and the width and position of an implement.

The selection unit 400 is a component for selecting the operation mode of the brake device 150.

The selection unit 400 is a component for commanding the switching of the operation mode through the operation of the user.

The selection unit 400 may be provided as a switching switch capable of switching between a first mode and a second mode.

The selection unit 400 may be provided as an on/off switch capable of turning on/off an automatic split brake function.

The integrated control unit 500 controls the brake device 150 to operate in the first or second mode selected via the selection unit 400.

The integrated control unit 500 is a component for controlling the drive unit 100, the detection unit 200, the setting unit 300, and the selection unit 400.

The integrated control unit 500 controls the brake device 150 to operate in the first mode or the second mode according to the detection result of the detection unit 200.

However, since the split brake function is not always advantageous for the brake device 150 depending on the working environment, there is also a need to turn off the split brake function depending on the situation.

The integrated control unit 500 determines whether to activate the split brake function by taking into considering the following conditions.

The integrated control unit 500 communicates with the detection unit 200, and may be provided with driving direction information in which the forward or reverse driving of the agricultural tractor is detected.

The integrated control unit 500 may determine whether to activate the split brake function according to driving direction information.

The integrated control unit 500 controls the operation of the brake device 150 so that the split brake function is activated in the case where the agricultural tractor is moving forward.

The integrated control unit 500 controls the operation of the brake device 150 so that the split brake function is activated when the regulation of the differential locking means 153 is released.

The integrated control unit 500 communicates with the detection unit 200, and may be provided with brake regulation information in which whether the first brake operation means 151 and the second brake operation means 152 are regulated by the differential locking means 153 is detected.

When the integrated control unit 500 is provided with the brake regulation information by the detection unit 200, it may determine whether to activate the split brake function based on the brake regulation information.

A specific description of the detailed configuration of the integrated control unit 500 will be provided below.

### <Description of Integrated Control Unit>

Referring once again to FIG. 2, in the control system 10 of an agricultural tractor according to one embodiment of the present invention, the integrated control unit 500 includes a collection part 510, a learning part 520, a storage part 530, a slip determination part 540, and a compensation control part 550.

The collection part 510 is a component for collecting the operation information of the brake device 150 operated by the user in the first mode.

The operation information collected by the collection part 510 may be the operation information of the components directly operated by the user. The operation information may include the amount of rotation of the steering wheel 131, the brake pedal 151a or 152a operated by the user and the pedal travel of the brake pedal 151a or 152a operated, and the operation information of the brake valve 153.

In the collection part 510, the detection information generated by the detection unit 200 at the time when operation information is generated is also collected.

The collection part 510 processes and collects all information regarding the user's method for operating the agricultural tractor and the driving states of the agricultural tractor driven in conjunction with it as training data.

The learning part 520 learns the training data, and updates a predefined control algorithm to an optimized form.

The learning part 520 inputs the training data, processed in the collection part 510, to the predefined control algorithm so that the predefined control algorithm learns it, thereby deriving a new control algorithm used to replace the control algorithm present at a previous time.

The control algorithm predefined in the learning part 520 may include machine learning-based neural networks.

The learning part 520 may learn operation information regarding the operation of the user based on location information. The control algorithm learned based on the location information enables the driving of the agricultural tractor to be controlled more easily without the intervention of the user during agricultural work in the same work target area in the future.

As the learning by the learning part 520 is repeated, a driving control method for the agricultural tractor based on the control algorithm may become similar to a driving control method based on the operation of the user.

As the user's driving proficiency increases, the control precision of the control algorithm may be improved further. When a control algorithm reflecting the work habits of a skilled user is applied for the driving control of an agricultural tractor in a different work environment, work efficiency above a specific level may be guaranteed.

The control algorithm updated by the learning part 520 is stored in the storage part 530.

The control algorithm stored in the storage part 530 is applied as a control algorithm configured to automatically control the operation of the brake device 150 when the brake device 150 operates in the second mode.

The slip determination part 540 determines slip based on the detection information.

The position information and the speed information may be referenced as the detection information used for the slip determination part 540 to determine slip.

The slip determination part 540 may determine that slip has occurred when the wheel speed of the drive wheels 121a, 121b, 121c, and 121d is sufficient to perform the turning intended by the user, but there is no change in the position of the agricultural tractor while driving.

The slip determination part 540 may determine that slip has occurred even when the wheel speed of the drive wheels 121a, 121b, 121c, and 121d is sufficient to perform the turning intended by the user, but there is a difference between the driving speed of the agricultural tractor predicted from the wheel speed and the actual driving speed of the agricultural tractor.

This is merely one example, so that it is obvious the slip determination part 540 may perform a slip determination by referring to variables other than the above-described variables out of the detection information.

The slip determination part 540 may calculate a slip error in addition to the slip determination.

The slip error may be determined from the difference between the driving path of the agricultural tractor upon determination, i.e., the actual driving path, and the target driving path determined by an optimized algorithm or the driving conditions set by the user.

The compensation control part 550 controls the operation of the drive unit 100 to compensate for the slip error determined by the slip determination part 540.

As an example, the compensation control unit 550 may variably apply stopping force, i.e., brake pressure, to one of the first and second drive wheels 121c and 121d, in which slip has occurred, to compensate for the slip error.

This is merely one example, so that it is obvious that a method of compensating for a slip error is not limited thereto.

The control system 10 of the agricultural tractor proposed by the present invention may reduce the difference between the target and actual driving paths of the agricultural tractor by compensating for the slip error.

Even when an unexpected path error occurs due to a work environment during the agricultural work of the agricultural tractor, it may be flexibly handled through the compensation control for a slip error, thereby ensuring high control precision in the control of the operation of the agricultural tractor, especially in the control of the turning.

A method of controlling an agricultural tractor using the control system 10 of the agricultural tractor will be conceptually described below with reference to the drawings.

### <Description of Method of Controlling Agricultural Tractor>

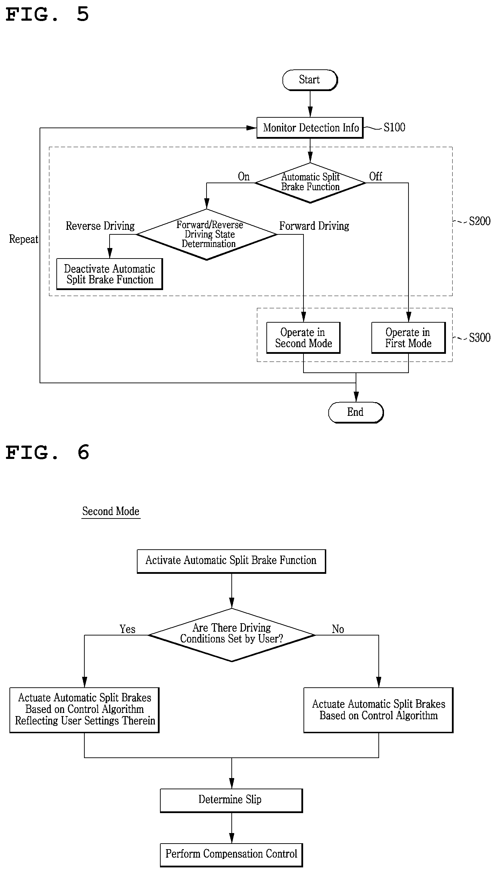

FIG. 4 is a flowchart illustrating a method of controlling an agricultural tractor using the control system 10 of the agricultural tractor according to one embodiment of the present invention, and FIGS. 5 to 7 are conceptual diagrams illustrating the method of controlling an agricultural tractor using the control system 10 of the agricultural tractor, shown in FIG. 4, in its entirety.

Referring to FIGS. 4 to 7, the method of controlling an agricultural tractor using the control system 10 of the agricultural tractor proposed by the present invention will be described below. For reference, general descriptions of respective components included in the control system 10 of the agricultural tractor have been provided previously, so that redundant descriptions that overlap them will be omitted.

### 1. Monitoring Step <S100>

A monitoring step S100 is the step of monitoring detection information in which the operation state of the agricultural tractor is detected.

In the monitoring step S100, the integrated control unit 500 monitors the detection information generated in real time by the detection unit 200.

The detection information is generated by a plurality of detection means provided in the detection unit 200 after the agricultural tractor has started agricultural work in a work target area.

Since the detection information has been described above, a detailed description thereof is omitted.

### 2. Activation Determination Step <S200>

An activation determination step S200 is the step of determining whether to activate a split brake function designed to selectively operate the first and second brakes 151b and 152b provided in the brake device 150.

In the activation determination step S200, the integrated control unit 500 activates or deactivates the split brake function of the brake device 150 depending on the detection information.

As one example, the detection information applied to activate the split brake function may be steering information regarding the steering angle of the agricultural tractor.

When the steering information included in the detection information being monitored contains a detected steering angle equal to or greater than a preset level, the integrated control unit 500 determines that the agricultural tractor intends to perform turning, and activates the split brake function.

When the split brake function of the brake device 150 is activated by the integrated control unit 500, the brake device 150 is operated in the first or second mode by a brake control step S300 to be described later.

For reference, before the brake device 150 operates in the first or second mode and functions as split brakes, the forward or reverse state of the agricultural tractor needs to be determined.

The integrated control unit 500 activates the split brake function so that it can operate only when the agricultural tractor is in a forward driving state.

When a detection means (not shown) for detecting whether the first and second brake operation means 151 and 152 are regulated by the differential locking means 153 is provided in the detection unit 200, brake regulation information may be provided to the integrated control unit 500 as a result of detecting whether the regulation of the differential locking means 153 is performed.

When brake regulation information is provided to the integrated control unit 500 by the detection unit 200, the integrated control unit 500 may determine whether to activate the split brake function of the brake device 150 according to the brake regulation information.

When the regulation of the differential locking means 153 is detected in the brake regulation information, the operations of the first and second brake operation means 151 and 152 are performed together, so that the integrated control unit 500 deactivates the split brake function.

However, the differential locking means 153 may be operated by manual operation involving user intervention. Whether the regulation of the differential locking means 153 is performed is a part that the user can sufficiently perceive. The integrated control unit 500 receiving brake regulation information from a separate detection means and determining whether to activate the split brake function based on the brake regulation information may be added or omitted depending on the degree of user intervention in the driving of the agricultural tractor.

### 3. Brake Control Step <S300>

A brake control step S300 is the step of controlling the brake device 150 to operate in either the first or second mode when the split brake function is activated in the activation determination step S200.

The operation mode of the brake device 150 may be determined by a user command input via the selection unit 400.

When the user selects the use of an automatic split brake function in the brake control step S300, the integrated control unit 500 detects this and activates the automatic split brake function.

However, in the case of an autonomous tractor, user intervention is minimized. Since the automatic split brake function is activated only under specific conditions, the automatic split brake function may be set to be always usable in an autonomous tractor.

Referring again to FIG. 4, when the automatic split brake function is activated, the brake device 150 operates in the second mode.

For a control process performed while the brake device 150 operates in the second mode, FIG. 6 may be referenced.

Referring to FIG. 6, when the brake device 150 operates in the second mode in the brake control step S300, the integrated control unit 500 controls the operation of the brake device 150 to perform a split brake function based on a predefined control algorithm.

When driving conditions are set via the setting unit 300, the integrated control unit 500 performs control based on a control algorithm, but controls the operation of the brake device 150 while reflecting user settings for the driving conditions in the control.

When there occurs a difference between the target and actual driving paths of the agricultural tractor through the monitoring of detection information while the brake device 150 performs the split brake function via the integrated control unit 500, it is determined whether slip has occurred.

In this case, when slip has occurred, additional compensation control for compensating for a slip error is performed, thereby reducing the difference between the target and actual driving paths.

When slip has not occurred or after compensation control has been performed due to slip, the above-described series of steps are repeated.

For reference, the control algorithm is updated to an optimized form by learning the detection information and operation information collected at the time when the split brake function is manually operated by the user, that is, when it is operated in the first mode.

The control algorithm, which is repeatedly learned and updated as the split brake function is manually operated by the user before the activation of the automatic split brake function, is stored in the storage part 530.

Once fully unmanned tractors have been commercialized, they will perform their agricultural work using an automatic split brake function on their own. Meanwhile, in the case of fully unmanned tractors, there are no opportunities for split brakes to be manually operated by users.

In this case, an implementation may be made such that training data related to the operation information collected by a plurality of agricultural tractors may be shared via an external server (not shown), and the fully unmanned tractors may learn the shared training data, update their installed control algorithm to an optimized form, and perform driving control using the updated control algorithm.

Referring again to FIG. 5, when the user selects not to use the automatic split brake function, the brake device 150 operates in the first mode.

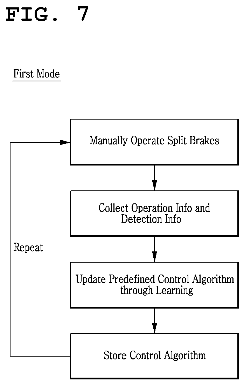

For a control process performed while the brake device 150 operates in the first mode, FIG. 7 may be referenced.

When the brake device 150 operates in the first mode in the brake control step S300, the operation of the brake device 150 may be controlled to perform the split brake function according to the operation information input by the operation of the user.

The user controls the brake device 150 so that the agricultural tractor makes a turn with an intended turning radius by operating the brake device 150.

Operation information and detection information are collected at the time when the split brake function is used in the process of controlling the driving of the agricultural tractor.

The collected operation information and detection information are used as training data intended to train a predefined control algorithm.

Whenever the manual operation of the split brake function is performed, the training data may be enriched by additional operation information, and the control algorithm may be updated to be more specialized for driving control using the split brake function.

The control algorithm optimized for driving control using the split brake function through a repetitive training process is stored in the storage part 530.

As described above, the control algorithm stored in the storage part 530 is utilized as a control algorithm for automatically implementing the split brake function when the brake device 150 operates in the second mode.

In the case where the storage of the control algorithm is completed, whenever the brake device 150 operates in the first mode, the above-described series of steps, i.e., the process of learning collected training data, updating a control algorithm to an optimized form, and storing the updated control algorithm, are repeated.

The above-described embodiments have been described using preferred examples of the present invention, and may have various forms of application. Therefore, the present invention should not be understood as being limited only to the content described above. Instead, the scope of the present invention should be understood as the separately described claims and their equivalents.

## Claims

1. A system (10) for controlling an agricultural tractor, the system (10) comprising:
a brake device (150) configured to apply stopping force to at least any one of first and second drive wheels (121c and 121d) that the agricultural tractor has;
a detection unit (200) configured to detect a driving state of the agricultural tractor; and
an integrated control unit (500) configured to control operation of the brake device according to the driving state of the agricultural tractor detected by the detection unit (200);
wherein the brake device (150) comprises:
a first brake operation means (151) configured to operate a first brake (151b) connected to the first drive wheel (121c); and
a second brake operation means (152) configured to operate a second brake (152b) connected to the second drive wheel (121d);
wherein the integrated control unit (500) controls the brake device (150) to operate in either a first or second mode;
wherein the brake device (150) operates in the first mode such that at least any one of the first and second brakes (151b and 152b) is operated according to operation information input by operation of a user; and
wherein the brake device (150) operates in the second mode such that at least any one of the first and second brakes (151b and 152b) is operated based on a predefined control algorithm.

2. The system (10) of claim 1, wherein:
the brake device (150) further comprises a differential locking means (153) configured to regulate the first and second brake operation means (151 and 152) to operate in conjunction with each other; and
the integrated control unit (500) activates a split brake function designed to selectively operate the first and second brakes (151b and 152b) when regulation of the differential locking means (153) is released.

3. The system (10) of claim 1, wherein:
the detection unit (200) generates detection information in which the driving state of the agricultural tractor is detected; and
the detection information comprises at least any one of position information, steering information, speed information, driving direction information, turning radius information, and brake pressure information of the agricultural tractor.

4. The system (10) of claim 3, wherein:
the driving direction information comprises a driving state of the agricultural tractor for forward driving or reverse driving thereof; and
the integrated control unit (500) activates a split brake function designed to selectively operate the first and second brakes (151b and 152b) when the agricultural tractor is driving forward.

5. The system (10) of claim 3, wherein:
the integrated control unit (500) comprises:
a collection part (510) configured to collect the operation information and the detection information as training data in the first mode;
a learning part (520) configured to learn the training data and update the predefined control algorithm to an optimized form; and
a storage part (530) configured to store the control algorithm updated through the learning in the learning part (520);
the learning part (520) optimizes and updates the control algorithm, stored in the storage part (530) at an immediately previous time through learning, at every time the training data is collected by the collection part (510); and
the control algorithm derives a control command to control operation of the brake device (150) according to a driving condition of the agricultural tractor.

6. The system (10) of claim 5, further comprising a setting unit (300) configured to set the driving condition.

7. The system (10) of claim 6, wherein the driving condition comprise a turning radius of the agricultural tractor.

8. The system (10) of claim 5, wherein the integrated control unit (500) further comprises:
a slip determination part (540) configured to determine slip based on the detection information; and
a compensation control part (550) configured to control operation of the agricultural tractor to compensate for a slip error determined by the slip determination unit (540).

9. The system (10) of claim 1, further comprising a selection unit (400) configured to select an operation mode of the brake device (150);
wherein the integrated control unit (500) controls the brake device (150) to operate in either a first or second mode according to the operation mode of the brake device (150) selected by the selection unit (400).

10. A method of controlling an agricultural tractor using a control system (10) of the agricultural tractor, the method comprising:
a monitoring step (S100) of monitoring detection information in which a driving state of the agricultural tractor is detected;
an activation determination step (S200) of determining whether to activate a split brake function designed to selectively operate first and second brakes (151b and 152b) provided in a brake device (150); and
a brake control step (S300) of, when the split brake function is activated in the activation determination step (S200), controlling the brake device (150) to operate in either a first or second mode;
wherein, when the brake device (150) operates in the first mode in the brake control step (S300), operation of the brake device (150) is controlled to perform the split brake function according to operation information input by operation of a user;
wherein, when the brake device (150) operates in the second mode in the brake control step (S300), operation of the brake device (150) is controlled to perform the split brake function based on a predefined control algorithm; and
wherein the control algorithm is updated to an optimized form while learning the detection information and the operation information collected at a time when the brake device (150) operates in the first mode.
